# EUROPEAN PATENT SPECIFICATION

(11) **EP 3 412 560 B1**
(45) Date of publication and mention of the grant of the patent: **12.02.2020**
(21) Application number: 17174444.4
(22) Date of filing: 05.06.2017
(51) Int. Cl.: B64C 3/56, B60F 5/02, B64C 37/00

(54) **WING FOLDING**
FLÜGELAUSKLAPPEN
PLIAGE D'AILE

(43) Date of publication of application: 12.12.2018
(73) Proprietor: AeroMobil R&D, s. r. o., 82106 Bratislava-mestska cast Podunajske Biskupice (SK)
(72) Inventor: GREN, Martin, 713 00 Ostrava, (CZ); URIK, Thomas, 908 41 Sastin-Straze (SK)
(74) Representative: Finnegan Europe LLP

(56) References cited:
- US-A- 1 711 637
- US-A- 2 609 167
- US-A- 3 371 886

## Description

This invention relates to a control interlock system suitable for use on an aircraft having foldable wings or stabilizers. In one particular embodiment, the aircraft is a convertible vehicle having a flight configuration and a road use configuration. Such vehicles are commonly known as flying cars or roadable aircraft (hereafter "flying cars").

There have been a number of previous proposals for flying car designs, i.e. vehicles that can be fully compliant with legal and practical requirements for both road and flight use. Examples include the Terrafugia Transition (WO 2007/114877), the Carplane (http://carplane.de/), the AeroMobil (WO 2013/03240, WO 2016/057003, WO 2016/057004), and the Moller Skycar (http://moller.com/). The Terrafugia Transition and the Aeromobil both attempt to resolve the conflict between the need for suitable wing span and area in flight use, and the need for a more limited lateral width in road use, by providing a wing folding mechanism. The Terrafugia Transition folds the wing along axes running for an aft through the wing resulting in a large side area when folded. The system disclosed in WO 2013/03240 and WO 2016/057004 involves pivoting or swinging the wings back so that they lie along the upper part of the vehicle body. In order to reduce the folded width, the rear part of each wing folds back over the front part of the respective wing. Further technical background is known from US 3371886 A, US 2609167 A and US 1711637 A which refer to control systems for foldable wings.

One issue that arises when folding wings is that the distance between control inputs (stick, yoke, rudder bar, etc.) and the control surfaces (aileron, rudder, vertical stabilizer) can change as the wing is folded. This can lead to unintended movement of the control surfaces and possible damage by contact with other parts of the aircraft. Alternatively, where the linkage between the control input and the control surface is disconnected to allow folding, the control surface can move in an unrestrained fashion and so may also become damaged.

This invention is an attempt to address these problems.

A first aspect of the invention provides a control system for a moveable control surface on a wing or stabilizer of an aircraft, comprising: a wing or stabilizer having a moveable control surface; a mounting structure for mounting the wing or stabilizer on the body of an aircraft; a hinge connection between the wing or stabilizer and the mounting structure, to allow the wing or stabilizer to be moved between extended and folded positions; and a control shaft mounted on the mounting structure and extending into the wing or stabilizer, the control shaft being configured to rotate under the influence of a control input so as to move the control surface on the wing or stabilizer; wherein the control shaft comprises separable first and second shaft parts, the first part being mounted on the mounting structure, and the second part being mounted on the wing or stabilizer, the first shaft part having a peg with a non-cylindrical outer surface, and the second shaft part defining a bore with a non-cylindrical inner surface, such that, when the wing or stabilizer is in the extended position, the peg is engaged in the bore so as to prevent relative rotation of the first and second shaft parts; the system further comprising a resiliently-biased locking pin mounted on the wing, the locking pin having a non-cylindrical outer surface, wherein the locking pin is configured such that it is biased into the bore when the peg on the first shaft part is withdrawn from the bore so as to lock the second shaft part against rotation and prevent movement of the control surface.

Resiliently biasing the locking pin into the bore allows the system to automatically lock the second part when the wing is folded.

The locking pin can be mounted on a lever arranged so as to extend over the end of the second shaft part, one end of the lever being located on the wing, and the lever being connected to biasing means to bias the lever towards the end of the second shaft part. The lever can extend across the end of the second shaft part and can be located on the wing by means of a hinge, and the biasing means can comprise a spring connected at the other end of the lever. A pair of jaws, spaced from the end of the lever, can be located on the wing and configured to receive the lever when the locking pin is engaged in the bore.

The end of the peg on the first shaft part, and/or the end of the locking pin can be tapered. This can ease engagement into the bore.

The second shaft part can comprise a cavity in connection with the bore, the locking pin extending through the cavity. A bearing can be positioned in the cavity between the locking pin and the second shaft part, the bearing being configured to accommodate non-linear movement of the locking pin as it is biased into the bore.

The locking pin can biased against the end of the peg when the peg is engaged in the bore. This can enable the second part to be either engaged with the first part, or locked in place at all times.

The first shaft part can be lockable with the control surface in a predetermined position when the wing or stabilizer is in the extended position.

The first part can include a lever arm for connection to a control input, and/or the second shaft part can include a lever arm for connection to the control surface.

Another aspect provides an aircraft comprising a convertible vehicle having a flight configuration and a road use configuration, the aircraft comprising a body; wheels for supporting, driving and steering the aircraft in a road use configuration; and a pair of wings connected to the body by a mounting structure, the wings being movable between an extended position in which the wings extend laterally from the body for a flight configuration, and a folded position in which the wings extend along the body from the mounting structure for a road use configuration; and a system according to the first aspect connecting moveable control surfaces on the wings to a control input in the aircraft body. The mounting structure can be tiltable about a lateral axis with respect to the body.

Another aspect provides method of operating the aircraft, comprising, with the wings extended for flight use, folding the wings back along the body by pivoting about the hinge connection such that the peg disengages from the bore, and the locking pin is biased into engagement in the bore so as to lock the position of the control surfaces with respect to the wings; or with the wings folded against the body for road use, extending the wings by pivoting about the hinge connection such that the peg engages in the bore so as to force the locking pin from the bore and lock the first and second shaft parts against relative rotation.

Further variations can be made within the scope of the invention.
Figure 1 shows a front perspective view of a flying car in a flight configuration;
Figure 2 shows a front perspective view of a flying car in a road use configuration;
Figure 3 shows detail of the wing mounting in the configuration shown in Figure 1;
Figures 4 and 5 show different views of the wing mounting part way through a transition between the configuration of Figure 1 and the configuration of Figure 2;
Figure 6 shows a detailed view of the control shaft and locking pin of Figure 3; and
Figure 7 shows a detailed view of the control shaft and locking pin of Figures 4 and 5.

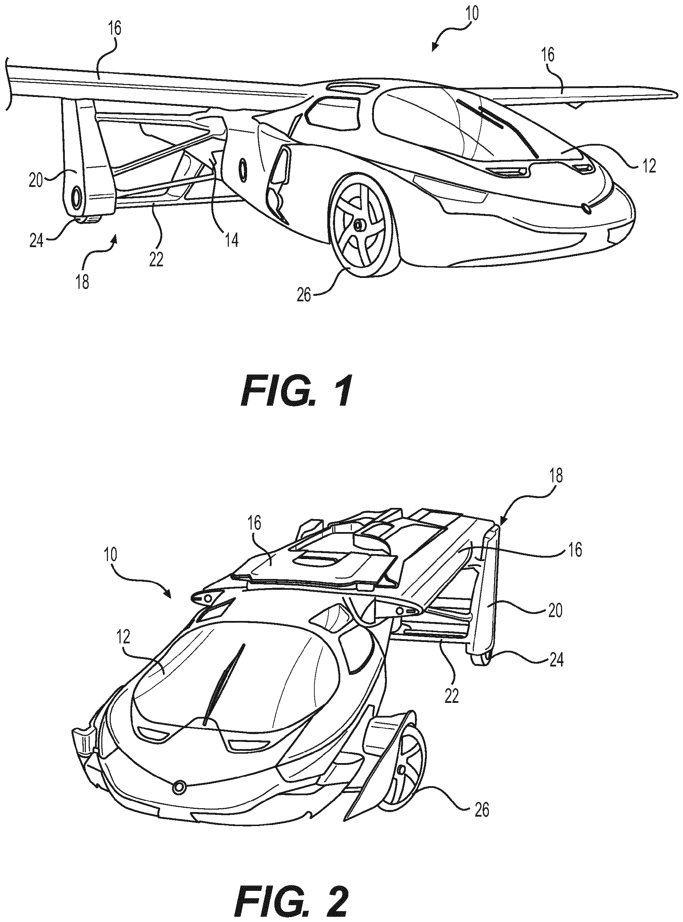

Referring to Figures 1 and 2, an aircraft comprising a convertible vehicle (a flying car) is shown, in a flight configuration (Figure 1) and a road use configuration (Figure 2). The flying car comprises a body structure 10 providing a crew compartment 12 and housing a motor (not shown) and propeller shaft (not shown) that extends from the motor to the rear 14 of the body structure 10, where the propeller is mounted as is described below. Wings 16 for providing lift and control (via ailerons, not shown) are mounted at the top of the body 10 immediately behind the crew compartment 12. The wings 16 are connected to a mounting structure (not shown) positioned within the body 10 beneath a moveable cover 17. The wings 16 can be moved between an extended position for flight use (Figure 1), and a folded position for road use (Figure 2). In the folded position, the wings lie along the top of the body 10, the long axes of the wings lying substantially parallel to the long axis of the body 10.

A tail structure 18 is located at the rear of the body 10, and includes vertical control surfaces 20 (fins and rudders), and horizontal control surfaces 22 (tail planes and elevators). Rear wheels 24 are provided at the lower ends of the fins 20.

Front wheels 26 are mounted on the body structure 10. The front wheels are both steerable and driven. In addition, the front wheels 26 can be moved between a retracted position (Figure 1) in which they are positioned close to the body to reduce drag in flight, and an open position (Figure 2) in which they are positioned for improved traction and control for road use.

When the wings 16 are folded back to lie along the rear of the body 14, the trailing edge part of one wing lies over the corresponding trailing edge part of the other wing. When folded in this way, the overall width of the folded wings lies within the lateral extremities of the vehicle as defined, for example, by the wheels when extended in the road use configuration. Furthermore, the width of the folded arrangement is such that the wings fit between the upper parts of the tail vertical control surfaces 20, and the wing tips are adjacent the tail horizontal control surfaces 22.

One problem with this arrangement is that if the ailerons are raised or lowered as the wings fold back, there is a danger that an aileron will contact the other wing as they overlap, leading to the potential for damage.

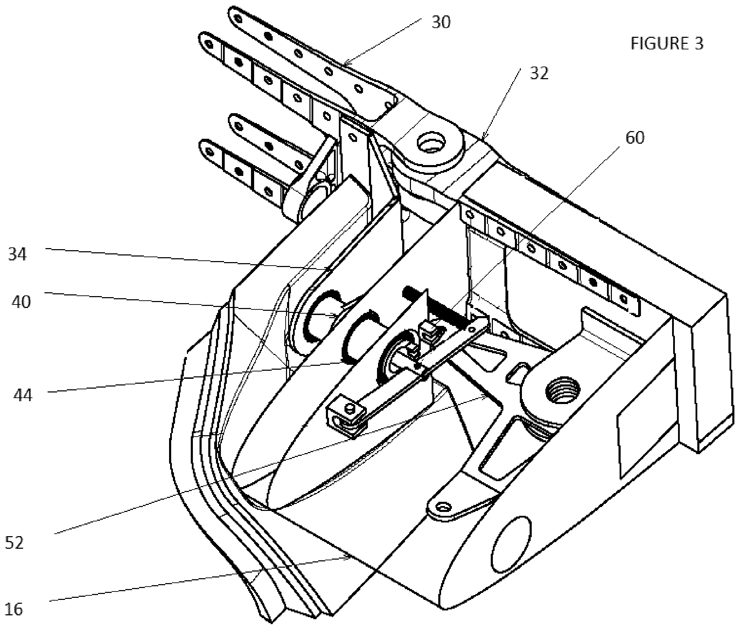

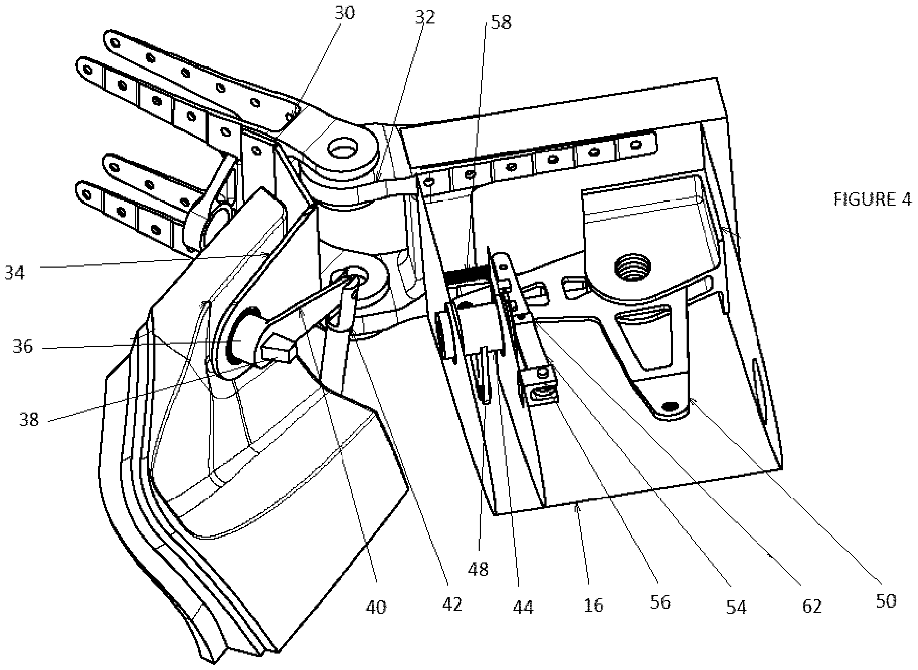

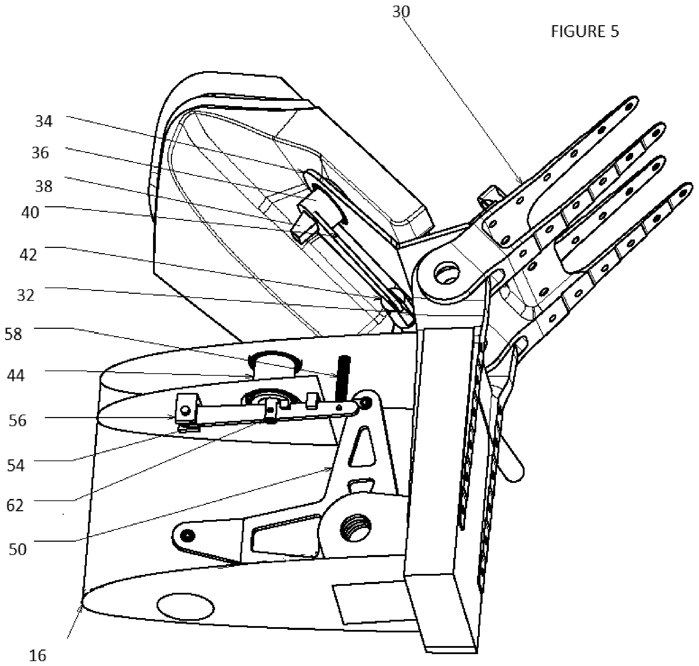

Referring now to Figures 3 - 5, an interlock system is described in which the control linkage for the ailerons can be disconnected to allow folding of the wings, yet which can maintain the ailerons in a predetermined position, such as a neutral position.

The wings are connected to a mounting structure 30, such as that described in European patent application no. 17157489.0, and shown in part in the Figures. The mounting structure 30 provides means by which the wings can be mounted on the body (not shown), and can include actuators and locking mechanisms (also not shown) allowing the wings to be extended for flight (as in Figure 1), or folded for road use (as shown in Figure 2). The mounting structure 30 also allows the wings to be tilted to adjust the angle of incidence for flight use, and to allow the wings to clear other body structures when being folded for road use.

The wings 16 are connected to the mounting structure 30 by means of a hinge connection 32 having a substantially vertical pivot axis.

Part of the mounting structure 30 extends forward of the hinge connection to provide a mounting bracket 34 for mounting a first part 36 of a control shaft that is mounted in bearings for rotation, and forms part of the control linkage for the ailerons.

The end of the first part 36 is formed as a tapered, square-section peg 38. A lever arm 40 extends from the side of the first part 36 and connects to a pushrod 42 forming part of a control linkage to a control input (e.g. a stick, side stick, yoke, etc.; not shown).

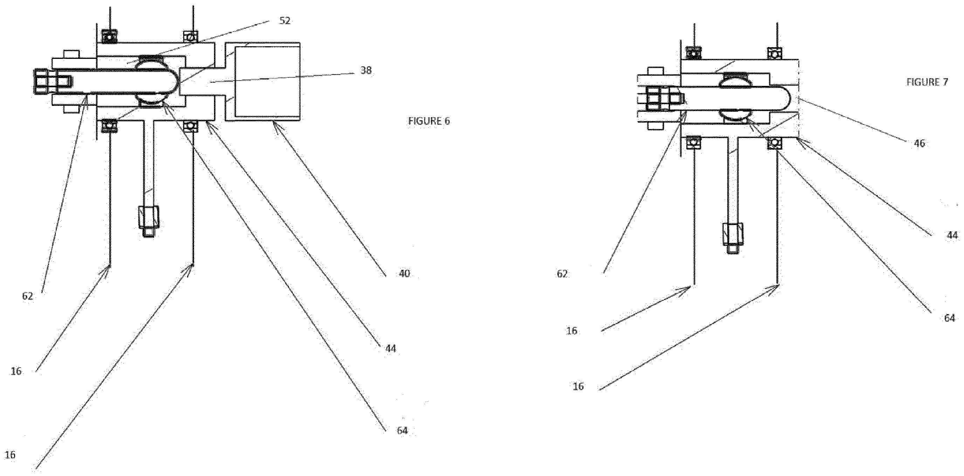

A second part 44 of the control shaft is mounted in bearings in rib structures forming part of the wing 16. An open bore 46 is provided in the end of the second part 44. The bore 46 has the corresponding size and shape to that of the peg 38, i.e. a square section. A lever arm extends from the side of the second part 44 and connects to a bell crank 50 that provides part of a mechanical linkage to the aileron (not shown). As can be seen in Figures 6 and 7, a cavity 52 is formed in the second part 44, the bore 46 opening into the cavity 52.

A locking lever 54 is mounted on the wing rib by means of a bracket 56 and extends across the open end of the cavity 52. A spring 58 is connected between the end of the locking lever 54 and a wing rib close to the wing root, and serves to bias the lever 54 towards the second part 44. A pair of jaws 60 are mounted on the rib on the opposite side of the opening of the cavity 52 to the bracket 56, the jaws being spaced to be able to receive the lever 54. A square section locking pin 62 is mounted on the lever 54 so as to project into the cavity 52. A spherical bearing 64 is located in the cavity 52 and has a bore through which the locking pin 62 can slide.

In the configuration shown in Figure 3, with the wings 16 extended, the first and second control shaft parts 36, 44 are engaged, the peg 38 being received in the bore 46 (see Figure 6). The square shape of the peg 38 and bore 46 mean that the first and second parts 36, 44 cannot rotate relative to each other. Consequently, rotation of the first part 36 by action of the pushrod 42 and lever arm 40 resulting from operation of the control input is transmitted to the second part 44, which in turn rotates to move the lever arm 48 and bell crank 50 to operate the aileron. The first and second parts 36, 44 effectively define a single control shaft in the control linkage.

As is shown in Figure 6, the effect of the spring 58 is to bias the end of the locking pin 62 against the end of the peg 38 when the peg is engaged in the bore 46.

When the configuration of the vehicle is to be changed from flight use (Figure 1) to road use (Figure 2), the wings 16 are folded back by pivoting about the hinge 32. This motion disengages the peg 38 from the bore 46 and allows the first and second parts 36, 44 to separate. As the peg 38 is withdrawn from the bore 46 in one direction, the locking pin 62 is urged into the bore 46 from the opposite direction due to the biasing action of the spring 48 on the lever 54. The end of the locking pin 62 can be rounded to ease engagement into the bore 46. When the peg is completely disengaged from the bore 46, the locking lever 54 can be pulled against the end of the second part 44, the lever 54 seating in the jaws 60. Thus the second part 44 is physically prevented from rotating relative to the wing rib, effectively locking the aileron linkage and preventing movement of the aileron.

When the configuration of the vehicle is to be changed back from road use to flight use, the wings are extended by pivoting around the hinge 32. As the first and second parts 36, 44 come together, the peg 38 engages in the bore 46, forcing the locking pin 62 out against the effect of the spring 58.

The tapered shape of the peg 38 accommodates the arcuate paths of the first and second parts as they separate or come together. The locking pin 62 can be pivoted on the locking lever 54 and, together with the action of the spherical bearing 64, this accommodates the non-linear path of the pin 62 due to the arcuate movement of the locking lever 54. In both cases, this reduces the likelihood of jamming or misalignment of the peg 38 or locking pin 62 with the bore 46

In order to maintain proper alignment of the control linkage, the control can be placed in a predetermined configuration for disconnection, such as a neutral aileron position, and the input locked, such as by locking the stick, yoke, etc., or by locking any other part of the input linkage. The locking of the second part by the locking pin 62 ensures that movement of the wing mounted part of the system relative to the body mounted part is prevented.

Failure of the locking mechanism is unlikely to have any effect on the control linkage in the flight configuration. As the locking pin 62 is completely disengaged from the connection between the first and second parts 36, 44, damage or failure to the locking lever 54, bracket 56, spring 58, jaws 60, or pin 62 will have no effect on the connection between the first and second control shaft parts 36, 44.

Various changes can be made to the elements described above. For example, the shape of the peg 38, bore 46, and pin 62 can be selected according to requirements. All that is necessary is that the engagement of the peg 8 in the bore 46 ensures that no relative rotation of the first and second parts 36, 44 is allowed. Furthermore, the spring biasing mechanism for the locking pin 62 can be selected according to requirements. The spring 58 itself can be any suitable tension spring, or can be positioned on the opposite side of the locking lever and provided with a reaction surface allowing use of a compression spring. A suitably resilient material can be used instead of a spring. Biasing can also be provided by providing the spring at the bracket end of the lever, such as in the form of a spiral spring in the bracket. The material of the lever can be selected to provide the biasing effect by distortion of the lever. Alternatively, other structures than levers can be sued, such as a compression spring mounted around the end of the cavity and active directly on the pin.

While the above description details a system for use with aileron control, the same system can be used for other moveable control surfaces on stabilizers, such as elevators on horizontal stabilizers, and rudders on vertical stabilizers. While these features are not foldable in the vehicle shown in Figures 1 and 2, it may be desirable to provide such folding structures in other cases.

The invention is limited by the scope of the appended claims.

## Claims

1. A control system for a moveable control surface on a wing or stabilizer of an aircraft, comprising:
a wing (16) or stabilizer having a moveable control surface (20, 22);
a mounting structure (30) for mounting the wing or stabilizer on the body of an aircraft;
a hinge connection (32) between the wing or stabilizer and the mounting structure (30), to allow the wing or stabilizer to be moved between extended and folded positions; and
a control shaft mounted on the mounting structure (30) and extending into the wing or stabilizer, the control shaft being configured to rotate under the influence of a control input so as to move the control surface on the wing or stabilizer;
wherein the control shaft comprises separable first (36) and second shaft parts (44), the first part being mounted on the mounting structure, and the second part being mounted on the wing or stabilizer, **characterised in that** the first shaft part (36) having a peg (38) with a non-cylindrical outer surface, and the second shaft part (44) defining a bore (46) with a non-cylindrical inner surface, such that, when the wing or stabilizer is in the extended position, the peg (38) is engaged in the bore (46) so as to prevent relative rotation of the first and second shaft parts;
the system further comprising a resiliently-biased locking pin (62) mounted on the wing, the locking pin (62) having a non-cylindrical outer surface, wherein the locking pin is configured such that it is biased into the bore (46) when the peg 38 on the first shaft part is withdrawn from the bore so as to lock the second shaft part against rotation and prevent movement of the control surface.

2. A system as claimed in claim 1, wherein the locking pin is mounted on a lever (54) arranged so as to extend over the end of the second shaft part, one end of the lever (54) being located on the wing, and the lever being connected to biasing means to bias the lever towards the end of the second shaft part.

3. A system as claimed in claim 2, wherein the lever (54) extends across the end of the second shaft part and is located on the wing by means of a hinge, and the biasing means comprises a spring (58) connected at the other end of the lever.

4. A system as claimed in claim 2 or 3, further comprising a pair of jaws (60) spaced from the end of the lever located on the wing and configured to receive the lever when the locking pin is engaged in the bore.

5. A system as claimed in any preceding claim, wherein the end of the peg (38) on the first shaft part, and/or the end of the locking pin (62) is tapered.

6. A system as claimed in any preceding claim, wherein the second shaft part comprises a cavity in connection with the bore (46), the locking pin (62) extending through the cavity.

7. A system as claimed in claim 6, wherein a bearing (64) is positioned in the cavity between the locking pin and the second shaft part, the bearing (64) being configured to accommodate non-linear movement of the locking pin as it is biased into the bore.

8. A system as claimed in any preceding claim, wherein the locking pin (62) is biased against the end of the peg when the peg (38) is engaged in the bore (46).

9. A system as claimed in any preceding claim, wherein the first shaft part (30) is lockable with the control surface in a predetermined position when the wing or stabilizer is in the extended position.

10. A system as claimed in any preceding claim, wherein the first part includes a lever arm (40) for connection to a control input, and/or the second shaft part includes a lever arm (48) for connection to the control surface.

11. A aircraft comprising a convertible vehicle having a flight configuration and a road use configuration, the aircraft comprising a body (10); wheels for supporting, driving and steering the aircraft in a road use configuration; and a pair of wings 16 connected to the body by a mounting structure (30), the wings being movable between an extended position in which the wings extend laterally from the body for a flight configuration, and a folded position in which the wings extend along the body from the mounting structure for a road use configuration; and a system as claimed in any preceding claim connecting moveable control surfaces on the wings to a control input in the aircraft body.

12. An aircraft as claimed in claim 11, wherein the mounting structure (30) is tiltable about a lateral axis with respect to the body.

13. A method of operating an aircraft as claimed in claim 11 or 12, comprising, with the wings (16) extended for flight use, folding the wings back along the body by pivoting about the hinge connection such that the peg (38) disengages from the bore (46), and the locking pin (62) is biased into engagement in the bore so as to lock the position of the control surfaces with respect to the wings.

14. A method of operating an aircraft as claimed in claim 11 or 12, comprising, with the wings (16) folded against the body for road use, extending the wings by pivoting about the hinge connection such that the peg (38) engages in the bore (46) so as to force the locking pin (62) from the bore and lock the first and second shaft parts against relative rotation.

## Patentansprüche

1. Steuersystem für eine bewegliche Steuerfläche an einem Flügel oder einem Stabilisator eines Luftfahrzeugs, umfassend:
einen Flügel (16) oder Stabilisator, der eine bewegliche Steuerfläche (20, 22) aufweist;
eine Montagestruktur (30) zum Montieren des Flügels oder Stabilisators an dem Rumpf eines Luftfahrzeugs;
eine Gelenkverbindung (32) zwischen dem Flügel oder Stabilisator und der Montagestruktur (30), um zu ermöglichen, dass der Flügel oder der Stabilisator zwischen einer ausgefahrenen und einer gefalteten Position bewegt wird;
und eine Steuerwelle, die an der Montagestruktur (30) montiert ist und sich in den Flügel oder Stabilisator erstreckt, wobei die Steuerwelle dazu konfiguriert ist, sich unter dem Einfluss einer Steuereingabe zu drehen, um die Steuerfläche an dem Flügel oder Stabilisator zu bewegen;
wobei die Steuerwelle trennbare erste (36) und zweite Wellenteile (44) umfasst, wobei der erste Teil an der Montagestruktur montiert ist und der zweite Teil an dem Flügel oder Stabilisator montiert ist, **dadurch gekennzeichnet, dass** der erste Wellenteil (36) einen Zapfen (38) mit einer nicht zylindrischen Außenfläche aufweist und der zweite Wellenteil (44) eine Bohrung (46) mit einer nicht zylindrischen Innenfläche definiert, so dass, wenn sich der Flügel oder Stabilisator in der ausgefahrenen Position befindet, der Zapfen (38) in die Bohrung (46) eingreift, um eine relative Drehung des ersten und des zweiten Wellenteils zu verhindern;
wobei das System ferner einen elastisch vorgespannten Verriegelungsstift (62) umfasst, der an dem Flügel montiert ist, wobei der Verriegelungsstift (62) eine nicht zylindrische Außenfläche aufweist, wobei der Verriegelungsstift so konfiguriert ist, dass er in die Bohrung (46) vorgespannt wird, wenn der Zapfen 38 an dem ersten Wellenteil aus der Bohrung herausgezogen wird, um das zweite Wellenteil gegen Verdrehen zu sichern und eine Bewegung der Steuerfläche zu verhindern.

2. System nach Anspruch 1, wobei der Verriegelungsstift an einem Hebel (54) montiert ist, der so angeordnet ist, dass er sich über das Ende des zweiten Wellenteils erstreckt, wobei sich ein Ende des Hebels (54) an dem Flügel befindet und der Hebel mit einer Vorspanneinrichtung verbunden, um den Hebel in Richtung des Endes des zweiten Wellenteils vorzuspannen.

3. System nach Anspruch 2, wobei sich der Hebel (54) über das Ende des zweiten Wellenteils erstreckt und an dem Flügel mittels eines Scharniers angebracht ist und die Vorspanneinrichtung eine Feder (58) umfasst, die am anderen Ende des Hebels verbunden ist.

4. System nach Anspruch 2 oder 3, ferner umfassend ein Paar Backen (60), die von dem Ende des Hebels beabstandet sind, der an dem Flügel angebracht ist, und dazu konfiguriert sind, den Hebel aufzunehmen, wenn der Verriegelungsstift in die Bohrung eingreift.

5. System nach einem der vorhergehenden Ansprüche, wobei das Ende des Zapfens (38) an dem ersten Wellenteil und/oder das Ende des Verriegelungsstifts (62) sich verjüngt.

6. System nach einem der vorhergehenden Ansprüche, wobei der zweite Wellenteil einen Hohlraum in Verbindung mit der Bohrung (46) umfasst, wobei sich der Verriegelungsstift (62) durch den Hohlraum erstreckt.

7. System nach Anspruch 6, wobei ein Lager (64) in dem Hohlraum zwischen dem Verriegelungsstift und dem zweiten Wellenteil positioniert ist, wobei das Lager (64) dazu konfiguriert ist, eine nichtlineare Bewegung des Verriegelungsstifts aufzunehmen, wenn dieser in die Bohrung vorgespannt wird.

8. System nach einem der vorhergehenden Ansprüche, wobei der Verriegelungsstift (62) gegen das Ende des Zapfens vorgespannt ist, wenn der Zapfen (38) in die Bohrung (46) eingreift.

9. System nach einem der vorhergehenden Ansprüche, wobei der erste Wellenteil (30) mit der Steuerfläche in einer vorbestimmten Position arretierbar ist, wenn sich der Flügel oder Stabilisator in der ausgefahrenen Position befindet.

10. System nach einem der vorhergehenden Ansprüche, wobei der erste Teil einen Hebelarm (40) zur Verbindung mit einem Steuereingang umfasst und/oder der zweite Wellenteil einen Hebelarm (48) zur Verbindung mit der Steuerfläche umfasst.

11. Luftfahrzeug, umfassend ein Wandelfahrzeug, das eine Flugkonfiguration und eine Straßengebrauchskonfiguration aufweist, wobei das Luftfahrzeug einen Rumpf (10);
Räder zum Stützen, Fahren und Lenken des Luftfahrzeugs in einer Straßengebrauchskonfiguration;
und ein Paar Flügel 16, die durch eine Montagestruktur (30) mit dem Rumpf verbunden sind, wobei die Flügel zwischen einer ausgefahrenen Position, in der sich die Flügel seitlich von dem Rumpf aus für eine Flugkonfiguration erstrecken, und einer gefalteten Position, in der sich die Flügel entlang des Rumpfes von der Montagestruktur aus für eine Straßengebrauchskonfiguration erstrecken, bewegbar sind;
und ein System nach einem der vorhergehenden Ansprüche, das bewegliche Steuerflächen an den Flügeln mit einem Steuereingang in dem Luftfahrzeugrumpf verbindet, umfasst.

12. Luftfahrzeug nach Anspruch 11, wobei die Montagestruktur (30) in Bezug auf den Rumpf um eine seitliche Achse kippbar ist.

13. Verfahren zum Betreiben eines Luftfahrzeugs nach Anspruch 11 oder 12, umfassend, mit den Flügeln (16) ausgefahren für den Fluggebrauch, das Zurückklappen der Flügel entlang des Rumpfes, indem sie um die Gelenkverbindung so gedreht werden, dass sich der Zapfen (38) von der Bohrung (46) löst und der Verriegelungsstift (62) in Eingriff in der Bohrung vorgespannt wird, um die Position der Steuerflächen in Bezug auf die Flügel zu verriegeln.

14. Verfahren zum Betreiben eines Luftfahrzeugs nach Anspruch 11 oder 12, umfassend, mit den Flügeln (16) gegen den Rumpf gefaltet für den Straßengebrauch, das Ausfahren der Flügel, indem sie um die Gelenkverbindung so gedreht werden, dass der Zapfen (38) in die Bohrung (46) eingreift, um den Verriegelungsstift (62) aus der Bohrung zu drücken und das erste und das zweite Wellenteil gegen Relativdrehung zu verriegeln.

## Revendications

1. Système de commande pour une gouverne mobile sur une aile ou un stabilisateur d'un aéronef, comprenant :
une aile (16) ou un stabilisateur possédant une gouverne mobile (20, 22) ;
une structure de montage (30) destinée à monter l'aile ou le stabilisateur sur le corps d'un aéronef ;
une liaison articulée (32) entre l'aile ou le stabilisateur et la structure de montage (30), pour permettre à l'aile ou au stabilisateur d'être déplacé entre des positions dépliée et pliée ;
et un arbre de commande monté sur la structure de montage (30) et s'étendant dans l'aile ou le stabilisateur, l'arbre de commande étant conçu pour tourner sous l'influence d'une entrée de commande de façon à déplacer la gouverne sur l'aile ou le stabilisateur ;
ledit arbre de commande comprenant des première (36) et seconde parties d'arbre (44) séparables, la première partie étant montée sur la structure de montage, et la seconde partie étant montée sur l'aile ou le stabilisateur, **caractérisé en ce que** la première partie d'arbre (36) possédant une cheville (38) avec une surface externe non cylindrique, et la seconde partie d'arbre (44) définissant un alésage (46) avec une surface interne non cylindrique, de sorte que, lorsque l'aile ou le stabilisateur est dans la position dépliée, la cheville (38) soit en prise dans l'alésage (46) de façon à empêcher la rotation relative des première et seconde parties d'arbre ;
le système comprenant en outre une broche de verrouillage (62) sollicitée élastiquement montée sur l'aile, la broche de verrouillage (62) possédant une surface externe non cylindrique, ladite broche de verrouillage étant conçue de sorte qu'elle soit sollicitée dans l'alésage (46) lorsque la cheville 38 sur la première partie d'arbre est retirée de l'alésage de façon à verrouiller la seconde partie d'arbre contre une rotation et d'empêcher le déplacement de la gouverne.

2. Système selon la revendication 1, ladite broche de verrouillage étant montée sur un levier (54) agencé de façon à s'étendre sur l'extrémité de la seconde partie d'arbre, une extrémité du levier (54) étant située sur l'aile, et le levier étant relié à des moyens de sollicitation pour solliciter le levier vers l'extrémité de la seconde partie d'arbre.

3. Système selon la revendication 2, ledit levier (54) s'étendant à travers l'extrémité de la seconde partie d'arbre et étant situé sur l'aile au moyen d'une articulation, et ledit moyen de sollicitation comprenant un ressort (58) relié à l'autre extrémité du levier.

4. Système selon la revendication 2 ou 3, comprenant en outre une paire de mâchoires (60) espacées de l'extrémité du levier située sur l'aile et conçues pour recevoir le levier lorsque la broche de verrouillage est en prise dans l'alésage.

5. Système selon l'une quelconque des revendications précédentes, ladite extrémité de la cheville (38) sur la première partie d'arbre et/ou l'extrémité de la broche de verrouillage (62) étant effilées.

6. Système selon l'une quelconque des revendications précédentes, ladite seconde partie d'arbre comprenant une cavité en liaison avec l'alésage (46), la broche de verrouillage (62) s'étendant à travers la cavité.

7. Système selon la revendication 6, un palier (64) étant positionné dans la cavité entre la broche de verrouillage et la seconde partie d'arbre, le palier (64) étant conçu pour s'adapter à un mouvement non linéaire de la broche de verrouillage lorsqu'elle est sollicitée dans l'alésage.

8. Système selon l'une quelconque des revendications précédentes, ladite broche de verrouillage (62) étant sollicitée contre l'extrémité de la cheville lorsque la cheville (38) est en prise dans l'alésage (46).

9. Système selon l'une quelconque des revendications précédentes, ladite première partie d'arbre (30) pouvant être verrouillée avec la gouverne dans une position prédéfinie lorsque l'aile ou le stabilisateur est en position dépliée.

10. Système selon l'une quelconque des revendications précédentes, ladite première partie comprenant un bras de levier (40) pour une liaison à une entrée de commande, et/ou ladite seconde partie d'arbre comprenant un bras de levier (48) pour une liaison à la gouverne.

11. Aéronef comprenant un véhicule convertible possédant une configuration de vol et une configuration d'utilisation routière, l'aéronef comprenant un corps (10) ;
des roues pour supporter, conduire et diriger l'aéronef dans une configuration d'utilisation routière ;
et une paire d'ailes 16 reliées au corps par une structure de montage (30), les ailes pouvant se déplacer entre une position dépliée dans laquelle les ailes s'étendent latéralement à partir du corps pour une configuration de vol, et une position pliée dans laquelle les ailes s'étendent le long du corps à partir de la structure de montage pour une configuration d'utilisation routière ;
et un système selon l'une quelconque des revendications précédentes, reliant des gouvernes mobiles sur les ailes à une entrée de commande dans le corps d'aéronef.

12. Aéronef selon la revendication 11, ladite structure de montage (30) pouvant s'incliner autour d'un axe latéral par rapport au corps.

13. Procédé d'exploitation d'un aéronef selon la revendication 11 ou 12, comprenant, avec les ailes (16) étendues pour une utilisation en vol, le repliage des ailes le long du corps en pivotant autour de la liaison articulée de sorte que la cheville (38) se désengage de l'alésage (46), et ladite broche de verrouillage (62) étant sollicitée pour se mettre en prise dans l'alésage de façon à verrouiller la position des gouvernes par rapport aux ailes.

14. Procédé d'exploitation d'un aéronef selon la revendication 11 ou 12, comprenant, avec les ailes (16) pliées contre le corps pour une utilisation sur route, le dépliage des ailes en pivotant autour de la liaison articulée de sorte que la cheville (38) se mette en prise dans l'alésage (46) de façon à forcer la broche de verrouillage (62) à partir de l'alésage et verrouiller les première et seconde parties d'arbre contre une rotation relative.
